(19) European Patent Office
Office européen des brevets

(11) Publication number: **0 122 237**
**A2**

# EUROPEAN PATENT APPLICATION

(21) Application number: **84830102.4**

(22) Date of filing: **04.04.84**

(51) Int. Cl.³: **F 16 T 1/30**

(30) Priority: **06.04.83 IT 2047083**

(43) Date of publication of application: **17.10.84**
**Bulletin 84/42**

(84) Designated Contracting States: **AT BE CH DE FR GB LI LU NL SE**

(71) Applicant: **JUCKER S.p.A., Via Campanini, 6, I-20124 Milano (IT)**

(72) Inventor: **Ferrari, Eugenio, Via Losanna, 7, I-20154 Milan (IT)**

(74) Representative: **De Nova, Roberto et al, c/o Jacobacci-Casetta & Perani S.n.c. Via Visconti di Modrone 7, I-20122 Milano (IT)**

(54) **Automatic discharge valve for condensates, of the in-line orifice type.**

(57) An automatic valve (1) for discharging condensates has a body (2) with in-line orifices (7, 8), a bell (9) movable in a chamber (6) in the body (2), an inlet duct (15, 16) for vapour and/or condensate extending from the inlet orifice (7) and opening into the bell (9) from above, an outlet duct (17) for the condensate extending from the chamber (6) to the outlet orifice (8), and valve means (19) in the outlet duct (17) controlled by the movement of the bell (6).

0122237

- 1 -
"Automatic discharge valve for condensates, of
the in-line orifice type"
The present invention relates to an automatic discharge
valve for condensates, of the in-line orifice type,
comprising a body, a chamber within the body, a bell
movable vertically in the chamber, an inlet duct
opening into the bell, and an outlet duct having
valve means controlled by the movement of the bell.

In such valves the particular arrangement of the
orifices , which are located on the same axis on
opposite sides of the body, results from the need
to allow them to be installed easily in line along
a pipe without having to change the course of the
pipe itself.

According to one widely used known solution, the
valves have their orifices formed in the upper part
of the body above the chamber which houses the bell.

The duct which carries vapour and/or condensate into
the bell is generally formed in the body itself during
casting, and extends from the inlet orifice through
the side wall of the body and its bottom, until it
is beneath the bell, and then up into the chamber
of the body until it is within the bell itself.
Such a solution involves a considerable loss of pressure
in the duct as well as considerable costs for the
body .

Furthermore, the presence of the duct increases the
size of the valve.

It has been suggested to form the duct by means of
a   tube which is located in the interspace between
the body and the bell and has its end bent upwards
into the bell, instead of in one piece with the body.

Although economic, this solution does, however, necessitate a reduction in the diameter of the bell, which leads to a less efficient valve than its outer dimensions would lead one to think.

It has also been suggested to form the bell with a lateral flattening in order to allow the passage of the tube without a reduction in the diameter of the bell itself.

This solution complicates the structure of the bell considerably and increases the cost.

The problem is clearly not even solved by locating the orifices at the bottom of the valve body since the pressure losses and the constructional complications resulting from the inlet duct would be exchanged for almost identical difficulties at the outlet duct, which would have to descend from the valve means that must remain in the upper part of the body in a position controlled by the bell.

The location of the orifices halfway up the body is even less effective at overcoming the disadvantages mentioned; in this solution, which is also known and used, the ducts both have lengths equal to about half the height of the body. They are thus easier to make by casting but result in a further increase in the overall dimensions of the valve.

Valves have also been put on sale, in which the inlet orifice is located at the bottom and has a vertical axis beneath the bell, and the outlet orifice is

- 3 -

located in the upper part of the body on the same vertical axis.

Such valves, notably economical in themselves and having low pressure losses , are poorly appreciated, however, because they must clearly be installed in a  pipe which has to be vertical, directed upwardly and then bent downwardly.

The problem behind the present invention is that of  realising a valve of the specified type adapted for in-line installation, which has structural and functional characteristics such as to overcome the disadvantages  mentioned above.

The concept which brings about the solution to the problem is that in which the inlet duct opens into the bell from above.

Consequently, in accordance with a preferred embodiment, the present invention provides a valve of the aforesaid type, which is characterised in that the inlet duct extends through a hole formed in the top of the bell.

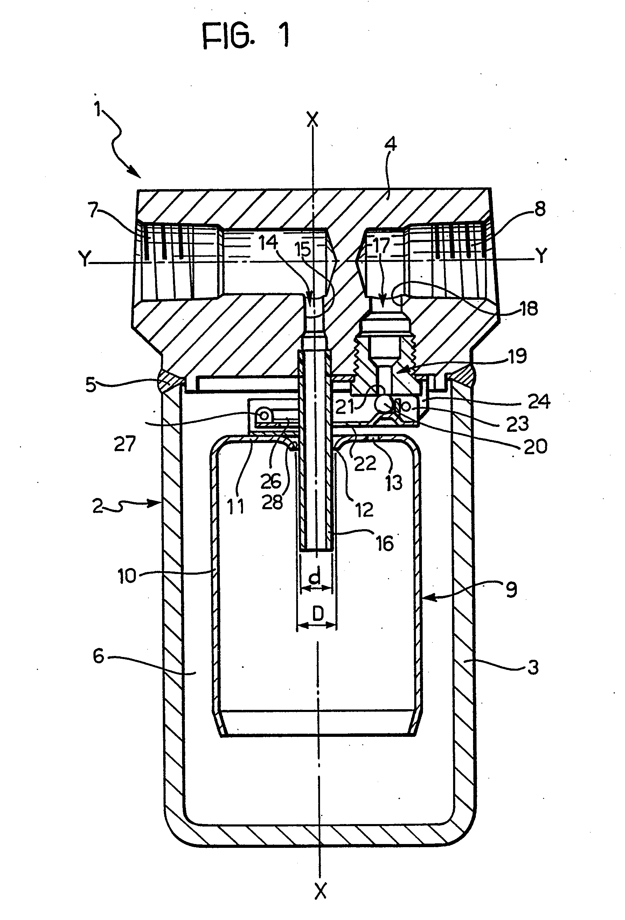

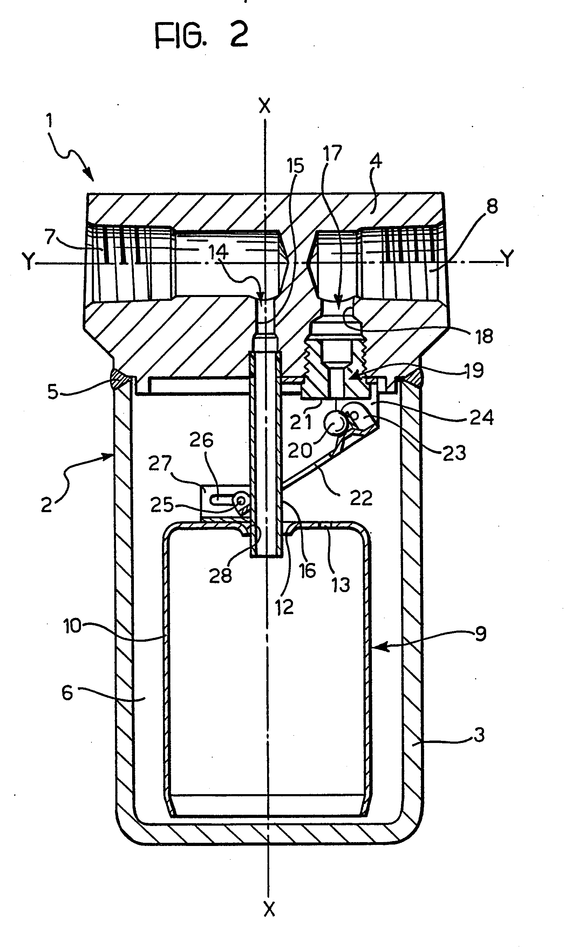

Further characteristics and advantages of the valve according to the present invention will become apparent from the following description of a preferred embodiment, given purely by way of non-limiting example, with reference to the appended drawings, in which Figures 1 and 2 are an elevational view  and a sectional view, respectively, of a valve according to the invention in two different conditions of operation.

With reference to the appended drawings, an automatic discharge valve for condensates according to the invention is generally indicated 1.

- 4 -

The valve 1 comprises a substantially cylindrical body 2 which has an axis X-X and is formed by a cup-shaped element 3 closed at the top by a head 4. The head 4 and the cup-shaped element 3 are fixed together by a continuous bead weld 5.

A closed cylindrical chamber 6 is defined within the body 2 by the cup-shaped element 3 and the head 4.

The valve 1 has orifices 7, 8 formed in opposite sides of the head 4 on a common axis Y-Y perpendicular to the axis X-X.

The valve 1 is intended to be connected in line in a horizontal pipe, not shown in the drawings, by means of the orifices 7,8 , the orifice 7 constituting the inlet for the vapour and/or condensate and the orifice 8 constituting the discharge outlet for the condensate.

A bell 9 which is freely movable in the direction X-X is housed coaxially within the cylindrical chamber 6.

The bell 9 is formed from a cylindrical peripheral skirt 10 and a top 11 in which are formed a central hole 12 of predetermined diameter D and a vent aperture 13.

An inlet duct for the vapour and/or condensate, generally indicated 14, extends from the orifice 7 to the bell 9 and opens into it from above.

More particularly, the duct 14 extends along the axis X-X and has a first section formed by a hole 15 in the head 4 and a second section formed by a tube 16 with an outer diameter $d$, which has one end fitted in the hole 15 and extending through the central hole 12 and has its opposite end opening into the bell 9.

An outlet duct for the condensate, generally indicated 17 , extends from the chamber 6 to the orifice 8 and is formed by a hole 18 in the head 4.

Valve means 19 are provided in correspondence with the duct 17 and include a shutter 20 and a shutter seat 21.

A lever 22, having one end 23 pivotally connected to a crank 24 fixed to the head 4 and its opposite end 25 operatively engaged with the top 11 of the bell 9, is provided to move the shutter 20 in known manner towards and away from the shutter seat 21 in accordance with the movement of the bell 9 in the chamber 6.

More particularly, the end 25 of the lever 22 engages a slot 26 formed in a bracket 27 fixed to the top 11 of the bell 9.

In the valve 1 according to the invention, the diameter $D$ of the central hole 12 and the diameter $d$ of the tube 16 are dimensioned so that an annular clearance of predetermined size is formed therebetween, the clearance constituting a vent aperture 28 for the bell.

The operation of the valve according to the invention is described below with reference to an initial

- 6 -

condition illustrated in Figure 1,in which the chamber
6 is not completely full of condensate whereby the
bell 9 is kept in a high position by the vapour trapped
therein.

In this position the lever 22 keeps the shutter 20
in engagement with the seat 21 and therefore the valve 1
does not discharge.

As condensate enters from the inlet orifice 7, the
quantity of vapour trapped in the bell 9 is reduced,
partly through escape from the apertures 28, 13 and
partly by condensation.

When the bell 9 is completely immersed and is therefore
no longer supported by the vapour  it sinks ,
moving into its lower position.

Consequently,the lever 22 causes the shutter 20 to
move away from the seat 21;  under these conditions
the valve can discharge and the condensate is
expelled by the pressure of the vapour(see Figure 2).

Once a certain  quantity of condensate has been discharged, the
bell is again raised by the vapour and re-assumes its
initial position.

The valve according to the invention has a low
pressure loss becauseof the limited length of the
ducts  and the possibility of making them  with
wide cross-sections without a corresponding increase
in the dimensions of the valve.

Furthermore,the valve is easy to manufacture, has
compact overall dimensions and a strong structure.

Finally,it operates regularly and constantly with time

- 7 -

without requiring any periodic maintenance even after long periods of time. Indeed it has been found that the movement of the bell relative to the inlet duct on each discharge of condensate results in self-cleaning of the clearance therebetween, keeping it free from jamming and blockage by impurities, with full effectiveness of its venting function.

Clearly, an expert in the art may make numerous modifications and variants to the valve described above in order to satisfy specific contingencies; however, all of these fall within the scope of protection of the invention defined by the following claims.

0122237

- 8 -

Claims:

1. Automatic discharge valve (1) for condensates, of the type comprising a body (2) defining a chamber (6) and in-line inlet and outlet orifices (7,8),a bell (9) movable vertically in the chamber (6), an inlet duct (15,16) opening into the bell (9) from the inlet orifice (7), an outlet duct (17) from the chamber (6) to the outlet orifice (8), and valve means (19) in the outlet duct (17) controlled by the movement of the bell (9), characterised in that the inlet duct (15,16) opens into the bell (9) from above.

2. Valve according to Claim 1, characterised in that the inlet duct (16) extends through a hole (12) formed in the top (11) of the bell (9).

3. Valve according to Claim 2, characterised in that the inlet duct (15,16) defines an annular clearance (28) in the hole (12), the clearance (28) constituting a vent aperture for the bell (9).

FIG. 1

0122237

FIG. 2